# EUROPEAN PATENT APPLICATION

(11) **EP 2 946 929 A1**
(43) Date of publication of application: **25.11.2015**
(21) Application number: 13848325.0
(22) Date of filing: 10.10.2013
(51) Int. Cl.: B41J 2/165, B41M 5/00, C09D 11/00

(54) **INKJET MAINTENANCE FLUID**

(30) Priority: 22.10.2012 JP 2012232561
(71) Applicant: DNP Fine Chemicals Co., Ltd., Kanagawa 226-0022 (JP)
(72) Inventor: YAMAZAKI, Fumie, Yokohama-shi Kanagawa 226-0022 (JP); MATSUMOTO, Kisei, Yokohama-shi Kanagawa 226-0022 (JP); INUMARU, Masaki, Yokohama-shi Kanagawa 226-0022 (JP); SHIRAISHI, Naoki, Yokohama-shi Kanagawa 226-0022 (JP)
(74) Representative: KATZAROV S.A.
(86) International application number: PCT/JP2013/077679
(87) International publication number: WO 2014/065134

(57) **Abstract**

Provided is an inkjet maintenance fluid that is stable and very safe, exhibits good ink-cleaning performance, and is widely applicable to a variety of types of inkjet ink. This inkjet maintenance fluid contains water, a water-soluble organic solvent containing 1,3-propanediol, and a surfactant. The water-soluble organic solvent preferably constitutes at least 20% of the mass of the maintenance fluid, and 1,3-propanediol preferably constitutes at least 30% of the mass of the water-soluble organic solvent. Even low-HLB surfactants are dissolved well, allowing application to a wide range of inkjet inks.

## Description

### TECHNICAL FIELD

The present invention relates to a maintenance fluid which is used to clean ink used in an inkjet recording apparatus or to be temporarily filled in an inkjet head.

### BACKGROUND ART

Regarding inkjet recording apparatuses, of these, so-called aqueous inkjet recording apparatuses have been widely used recently for professional use to impart design properties to large-scale planar objects or three-dimensional objects as well as for household printers to perform printing on normal thin paper or a sheet. Particularly, in the case of professional use, it is necessary to regularly clean the inside of the nozzle or the outlet of the nozzle of an inkjet head, which is an ink ejection portion, for the purpose of preventing ink clogging. Therefore, an aqueous maintenance fluid for cleaning is needed separately from the ink.

Such an aqueous maintenance fluid, generally contains water, a water-soluble organic solvent, and a surfactant. As the water-soluble organic solvent, ethylene glycol, diethylene glycol, ethylene glycolmonoalkyl ethers, diethylene glycolmonoalkyl ethers, triethylene glycolmonoalkyl ethers or the like are generally used. However, these water-soluble organic solvents have high toxicity, and in the case of accidental ingestion, it has been known that they cause symptoms of poisoning, such as hepatic function disorder or renal function impairment, adverse effects to the central nervous system, or have reproductive toxicity. In particular, since ethylene glycol or diethylene glycol has strong toxicity, indication of reproductive toxicity and the risk for specific target organs (kidney and liver) has to be made depending on the content thereof.

Furthermore, diethylene glycol is generally used in aqueous inkjet ink, and it is difficult to dissolve a surfactant or resin having low hydrophilicity. Furthermore, since diethylene glycol exhibits acidity when it is subjected to hydrolysis by heat or the like, in the case of long-term storage, the pH of the ink is decreased and solubility or miscibility is deteriorated, and thus a problem in aggregation or sedimentation may occur. Moreover, a mixed solvent of diethylene glycol, diethylene glycolmonoalkyl ethers, triethylene glycolmonoalkyl ethers, and water has low solubility, and, for example, when a surfactant having a low HLB is used, separation may occur at high temperatures or precipitation may occur at low temperatures in some cases. As described above, when a large amount of diethylene glycol is contained, various problems may occur in some cases.

The following Patent Documents 1 and 2 disclose maintenance fluids containing alcohols, ethers, esters, and acetates which have high solubility. However, since these solvents have too high solubility, when a large amount of these solvents is contained in the maintenance fluid, they dissolve components formed of rubber, plastic or the like which are used in an apparatus, and thus problems may occur in the apparatus. Furthermore, since a solvent having a low boiling point or ignition point is included in these organic solvents and rapidly dries, in a case where the dissolved substance is precipitated, there is a problem in that the nozzle is easily clogged. Furthermore, a solvent with a safety problem is included in these solvents.

Furthermore, these maintenance fluids of the related art have problems in that they are also easily influenced by the ink composition as the target for cleaning and are not widely applicable to a variety of types of inkjet ink. As described above, currently, a maintenance fluid that is stable and very safe, exhibits good ink-cleaning performance, and is widely applicable to a variety of types of inkjet ink has not been yet completed.
Patent Document 1: Japanese Unexamined Patent Application, Publication No. 2007-119658
Patent Document 2: Japanese Unexamined Patent Application, Publication No. 2010-137458

### DISCLOSURE OF THE INVENTION

### Problems to be Solved by the Invention

The invention was made in view of such circumstances, and an object thereof is to provide an inkjet maintenance fluid (hereinafter, also simply referred to as a maintenance fluid) that is stable and very safe, exhibits good ink-cleaning performance, and is widely applicable to a variety of types of inkjet ink.

### Means for Solving the Problems

The present inventors conducted intensive studies for solving the above-described problems, and as a result, they found that it is possible to provide an inkjet maintenance fluid that is stable and very safe, exhibits good ink-cleaning performance, and is widely applicable to a variety of types of inkjet ink by using 1,3-propanediol as a water-soluble organic solvent constituting the maintenance fluid, thereby leading to the completion of the invention.

In recent years, a method of synthesizing 1,3-propanediol by using microorganisms has been industrialized and 1,3-propanediol is available as a bio-based material. 1,3-Propanediol has been widely used together with glycerin and propylene glycol in fields such as cosmetics or the food industry in which safety is considered to be particularly important, from the viewpoint of the fact that 1,3-propanediol has high safety.

Incidentally, for example, in Patent Documents 1 and 2 described above, 1,3-propanediol is also described as an example of a moisturizing agent in the description of the maintenance fluid composition. However, there is no description on solubility in a surfactant, miscibility with water or other solvents, cleaning performance, wide applicability to a variety of types of inkjet ink, temporal stability, alternate ejection property with an ink, or the like as described in Examples to be described later, and in the past, there was no example of examining which organic solvent is preferable in a case where the physical properties required in the maintenance fluid are comprehensively taken into consideration. As a result, currently, a composition comprehensively satisfying the performance required of the maintenance fluid has not been yet completed.

Furthermore, in Patent Document 1, 1,3-propanediol is essentially combined with a resin solvent and a moisturizing agent in addition to the fact that 1,3-propanediol is merely an example of a moisturizing agent. Since this resin solvent is added in order to effectively dissolve a resin dispersing agent or the like in the ink, some resin solvents dissolve or swell a component of the nozzle or the head and so problems are caused.

The present inventors conducted intensive studies on the aforementioned problems, and as a result, they found that, among various organic solvents, 1,3-propanediol has excellent solubility in a resin dispersing agent or the like as well as an effect as a moisturizing agent, and also, it does not cause the dissolving or swelling of a component of the nozzle or the head. According to this, they found a composition in which a resin solvent is not essentially contained while comprehensively satisfying the required performance as described above, thereby leading to the completion of the invention.

Specifically, the invention provides the following.
(1) An inkjet maintenance fluid containing water, a water-soluble organic solvent, and a surfactant,
   in which 1,3-propanediol is contained as the water-soluble organic solvent.
(2) The inkjet maintenance fluid described in (1), in which the water-soluble organic solvent is contained at an amount of 20% by mass or more in the inkjet maintenance fluid, and
   the 1,3-propanediol is 30% by mass or more of the water-soluble organic solvent.
(3) The inkjet maintenance fluid described in (1) or (2), in which, in the inkjet maintenance fluid, the 1,3-propanediol is contained at an amount of 10% by mass or more to 80% by mass or less and the content of the following organic solvent (A) and organic solvent (B) is each less than 5%.
   Organic solvent (A): an organic solvent having an ignition point lower than 60°C selected from the group consisting of alcohols, ketones, and esters
   Organic solvent (B): an organic solvent selected from the group consisting of nitrogen-containing heterocyclic compounds and cyclic sulfones
(4) The inkjet maintenance fluid described in any one of (1) to (3), further containing propylene glycol and/or glycerin as the water-soluble organic solvent.
(5) The inkjet maintenance fluid described in any one of (1) to (4), in which the surfactant is a nonionic surfactant.
(6) The inkjet maintenance fluid described in any one of (1) to (5), wherein the surfactant is an acetylene glycol-based surfactant.
(7) The inkjet maintenance fluid described in any one of (1) to (4), wherein the surfactant is a silicon-based surfactant.
(8) The inkjet maintenance fluid described in any one of (1) to (7), further containing an anionic surfactant as the surfactant.
(9) The inkjet maintenance fluid described in any one of (1) to (8), further containing a surfactant having an HLB value of 14 or less as the surfactant.
(10) A method of cleaning an inkjet recording apparatus, the method including cleaning a liquid-repellent surface of an ink ejection portion of an inkjet recording apparatus using the inkjet maintenance fluid described in any one of (1) to (9).
(11) A method of cleaning an inkjet recording apparatus, the method including ejecting the inkjet maintenance fluid described in any one of (1) to (9) from an ink ejection portion of an inkjet recording apparatus to clean an inside of a flow passage of the ink ejection portion.
(12) An inkjet ink set including:
   the inkjet maintenance fluid described in any one of (1) to (9); and
   an aqueous inkjet ink containing water, a water-soluble organic solvent, a surfactant, and a color material.

### Effects of the Invention

According to the invention, it is possible to provide an inkjet maintenance fluid that is stable and very safe, exhibits good ink-cleaning performance, and is widely applicable to a variety of types of inkjet ink.

### PREFERRED MODE FOR CARRYING OUT THE INVENTION

Hereinafter, specific embodiments of the invention will be described in detail. However, the invention is not intended to be limited to the embodiment described below, and can be carried out by applying appropriate modification within the intended scope of the invention.

Hereinafter, the maintenance fluid of the invention will be described in detail. The maintenance fluid according to the invention contains water, a water-soluble organic solvent, and a surfactant, and it also contains 1,3-propanediol as the water-soluble organic solvent.

### Water

Water is not particularly limited, but it is preferable to use ion-exchange water or deionized water such as distilled water. In order to prevent agglomeration in the case of mixing with an ink, and to prevent corrosion or precipitation from occurring in the case of being into contact with a metal component, the content of metal ions is preferably 1000 ppm or less and the conductivity is preferably 10 µS/cm or less.

The proportion of water in the maintenance fluid is appropriately set and is not particularly limited, but is preferably between 10 to 80% by mass.

### Water-Soluble Organic Solvent

It is essential that 1,3-propanediol be contained as the water-soluble organic solvent in the invention, as it is the feature of the invention. As it can be clearly seen from the description of Patent Document 1 described above, 1,3-propanediol is merely exemplified as an example of moisturizing agents constituting the maintenance fluid, and also, it is assumed that 1,3-propanediol is used together with a resin solvent. In Patent Document 1, this means that the roles of the resin dissolving component and the moisturizing component are divided and two types of organic solvent corresponding to each role are mixed. As a result, depending on the types of resin solvent, a problem occurs in which a component of the nozzle or the head is dissolved or swollen as described above. On the other hand, 1,3-propanediol solely has both a moisture-retaining property and solubility.

In terms of solubility, 1,3-propanediol has higher solubility than a glycol-type solvent having a high boiling point, such as diethylene glycol or glycerin, and thus it easily dissolves a surfactant. Also, 1,3-propanediol has high miscibility with water or other solvents and thus it has properties as a very favorable organic cosolvent in which separation or precipitation is less likely to occur. For this reason, the adjustment range of the surface tension of the maintenance fluid can be broadened, and further, the cleaning effect of the maintenance fluid can be improved.

On the other hand, an extremely wide range of solvents are described as an example of a resin solvent in Patent Document 1, and in particular, diacetone alcohol, tetrahydrofuran, acetonylacetone, ethyl acetate, N,N'-dimethyl formamide, and sulfolane having extremely high resin solubility are described in Examples. Since these have high solubility in a resin, there is a high risk of dissolving or swelling a component constituting the head or the like. Since 1,3-propanediol has low resin solubility as compared with these solvents described above, problems do not occur in the apparatus due to the dissolving or swelling of the component even when the content of 1,3-propanediol in the maintenance fluid is high.

In particular, recently, an inkjet head needs to have an extremely precise structure by performing high densification and miniaturization. For this reason, when a resin adhesive or a resin piece is swollen or dissolved, problems such as occurrence of distortion or damage of an ink flow passage easily occur. Since the structure of the inkjet recording apparatus also becomes complex and needs high precision, when a resin member is swollen or dissolved, various problems also may occur in the recording apparatus itself. For this reason, selection of a solvent becomes important so that the resin members used in the inkjet head and the inkjet recording apparatus are not dissolved or swollen. Here, attention has not yet been paid to the fact that 1,3-propanediol has proper solubility.

As a matter of course, from the viewpoint of the moisture-retaining property, since 1,3-propanediol has a high boiling point and exhibits a great effect as a wetting agent, the nozzle is less likely to be clogged.

For these reasons, 1,3-propanediol having the various required performances, that is, proper solubility and a moisture-retaining property, is at the same time very suitable as a solvent used in the maintenance fluid.

The proportion of the water-soluble organic solvent in the maintenance fluid is preferably 20% by mass or more, more preferably between 20 to 80% by mass, even more preferably between 25 to 60% by mass, and particularly preferably between 25 to 50% by mass, but the proportion of the water-soluble organic solvent is appropriately adjusted according to the use conditions such as the inkjet recording apparatus or the head in which the maintenance fluid is used, and the temperature range of use.

Furthermore, the content of 1,3-propanediol in the maintenance fluid is preferably 10% by mass or more, more preferably between 10 to 80% by mass, even more preferably between 10 to 60% by mass, and particularly preferably between 10 to 50% by mass. When the content thereof is within the above numerical range, it is possible to obtain a maintenance fluid that is stable and very safe, exhibits good ink-cleaning performance, and is widely applicable to a variety of types of inkjet ink. On the other hand, when the content thereof is less than 10% by mass, solubility in a surfactant or other components may be decreased in some cases, which is not preferable.

The content of 1,3-propanediol in the whole water-soluble organic solvent is preferably 30% by mass or more, more preferably 50% by mass or more, and even more preferably 65% by mass or more, and the case where the content thereof is 100% by mass is also included. When the content thereof is within the above numerical range, it is possible to obtain a maintenance fluid that is stable and very safe, exhibits good ink-cleaning performance, and is widely applicable to a variety of types of inkjet ink. On the other hand, when the content thereof is less than 30% by mass, solubility in a surfactant or other components may be decreased in some cases, which is not preferable.

As a water-soluble organic solvent other than 1,3-propanediol, those other than the above-described substance can also be used within a range that does not impair safety or the physical properties of the maintenance fluid. Incidentally, water is not included in the water-soluble organic solvent in the invention. Examples of such a water-soluble organic solvent include diols such as propylene glycol, dipropylene glycol, isobutylene glycol, tripropylene glycol, 1,2-butanediol, 1,3-butanediol, 1,4-butanediol, 1,2-pentanediol, 1,2-hexanediol, 1,5-pentanediol, 1,6-hexanediol, 2-methyl-2,4-pentanediol, 3-methyl-1,3-butanediol, 3-methyl-1,5-pentanediol, and isobutylene glycol; triols such as glycerin, trimethylolethane, trimethylolpropane, and 1,2,6-hexanetriol; tetrahydric alcohols such as mesoerythritol and pentaerythritol; monohydric alcohols such as 3-methoxy-3-methyl-1-butanol, 3-methoxy-1-propanol, 1-methoxy-2-propanol, and 3-methoxy-n-butanol; oxyethylene or oxypropylene copolymers such as polyethylene glycol and polypropylene glycol; monoalkyl ethers of a polyhydric alcohol such as propylene glycol monomethyl (or ethyl, propyl, or butyl) ether, dipropylene glycol monomethyl (or ethyl, propyl, or butyl) ether, tripropylene glycol monomethyl (or ethyl, propyl, or butyl) ether, ethylene glycol monomethyl (or ethyl, propyl, or butyl) ether, diethylene glycol monomethyl (or ethyl, propyl, or butyl) ether, and triethylene glycol monomethyl (or ethyl, propyl, or butyl) ether; dialkyl ethers of a polyhydric alcohol such as propylene glycol dimethyl ether, propylene glycol diethyl ether, propylene glycol ethylmethyl ether, dipropylene glycol dimethyl ether, dipropylene glycol diethyl ether, dipropylene glycol ethylmethyl ether, tripropylene glycol dimethyl ether, tripropylene glycol diethyl ether, tripropylene glycol ethylmethyl ether, diethylene glycol dimethyl ether, diethylene glycol diethyl ether, diethylene glycol ethylmethyl ether, triethylene glycol dimethyl ether, triethylene glycol diethyl ether, tetraethylene glycol dimethyl ether, and tetraethylene glycol diethyl ether; cyclic compounds such as γ-valerolactone and γ-butyrolactone; alkanolamines such as monoethanolamine, diethanolamine, triethanolamine, N-methylethanolamine, N-ethylethanolamine, N-butylethanolamine, N-methyldiethanolamine, N-ethyldiethanolamine, and N-butyldiethanolamine; alkylamides such as N,N-dimethyl-β-butoxypropionamide, N,N-dimethyl-β-pentoxypropionamide, N,N-dimethyl-β-hexoxypropionamide, N,N-dimethyl-β-heptoxypropionamide, N,N-dimethyl-β-2-ethylhexoxypropionamide, N,N-dimethyl-β-octoxypropionamide, N,N-diethyl-β-butoxypropionamide, N,N-diethyl-β-pentoxypropionamide, N,N-diethyl-β-hexoxypropionamide, N,N-diethyl-β-heptoxypropionamide, and N,N-diethyl-β-octoxypropionamide; alcohols; and esters.

Even when these water-soluble organic solvents are used alone or as a mixture, they can be used within a range that does not impair safety or contribute to component solubility. The content of the water-soluble organic solvent other than 1,3-propanediol is not particularly limited, but can be set, for example, to about 0.1 to 70% by mass, preferably in a range of 0.5 to 50% by mass, and more preferably in a range of 0.5 to 30% by mass, with respect to the total amount of the maintenance fluid.

Among them, it is preferable to further contain propylene glycol and/or glycerin from the viewpoint of improving the physical properties of the maintenance fluid or safety. According to the addition of propylene glycol, an effect is achieved in which frost resistance or low-temperature fluidity is improved, or solubility can be adjusted. According to the addition of glycerin, an effect is achieved in which the maintenance fluid is prevented from drying in the flow passage by improving the moisture-retaining property of the maintenance fluid, or miscibility of the maintenance fluid with the ink is improved. The mixing ratio of 1,3-propanediol, propylene glycol, and glycerin can be appropriately adjusted according to the characteristics or use conditions of the inkjet recording apparatus.

The total content of 1,3-propanediol, propylene glycol, and/or glycerin in the water-soluble solvent in the maintenance fluid is preferably between 10 to 80% by mass, more preferably between 20 to 80% by mass, even more preferably between 20 to 70% by mass, and particularly preferably between 30 to 70% by mass. When the content thereof is within the above numerical range, it is possible to obtain a maintenance fluid that is stable and very safe, exhibits good ink-cleaning performance, and is widely applicable to a variety of types of inkjet ink. Furthermore, the total content of 1,3-propanediol, propylene glycol, and/or glycerin in the maintenance fluid is preferably 10% by mass or more, more preferably between 10 to 80% by mass, even more preferably between 15 to 70% by mass, and particularly preferably between 20 to 60% by mass. When the content thereof is within the above numerical range, it is possible to obtain a maintenance fluid that is stable and very safe, exhibits good ink-cleaning performance, and is widely applicable to a variety of types of inkjet ink.

On the other hand, in order not to impair the safety or physical properties of the maintenance fluid, for example, it is preferable to use 5% or less of an organic solvent having high volatility and high inflammability, such as methyl formate, methyl ethyl ketone, or tetrahydrofuran, and more preferably is not substantially contained. Since an organic solvent having low inflammability has a high possibility that solvent vapor is ignited by static electricity, it has low safety. Furthermore, since the organic solvent has high volatility, it has a strong odor. Accordingly, such an organic solvent is not preferable. In order to maintain a favorable working environment with a high safety and low odor level, the ignition point of the organic solvent used in the maintenance fluid is preferably 60°C or higher. When the ignition point of the organic solvent used in the maintenance fluid is 60°C or higher, the risk of ignition is low and thus safety is high. Meanwhile, when the ignition point of the organic solvent is 60°C or higher, volatility is low. Therefore, the risk of inhaling vapor of the organic solvent becomes low and thus the odor of the maintenance fluid becomes weak. Accordingly, this ignition point is preferable.

Furthermore, the organic solvent which may dissolve or swell a resin member of the head or the recording apparatus to damage the apparatus is preferably 5% or less, more preferably less than 1%, and even more preferably it is not substantially contained. Examples of such an organic solvent include, for example, diacetone alcohol, tetrahydrofuran, acetonylacetone, ethyl acetate, N,N'-dimethyl formamide, or sulfolane, which is a resin solvent described in Examples of Patent Document 1.

Furthermore, examples of another organic solvent which is contained preferably at 5% or less, more preferably at less than 1%, and even more preferably is not substantially contained, include (A) an organic solvent having an ignition point of lower than 60°C selected from the group consisting of alcohols, ketones, and esters, and (B) an organic solvent selected from the group consisting of nitrogen-containing heterocyclic compounds and cyclic sulfones. Examples of alcohols include methyl alcohol, ethyl alcohol, n-propyl alcohol, isopropyl alcohol, furfuryl alcohol, and tetrahydrofurfuryl alcohol. Examples of ethers include dioxane, trioxane, tetrahydropyran, 1,2-dimethoxyethane, 1,2-diethoxyethane, and methylal. Examples of ketones include acetone, methyl ethyl ketone, 2-pentanone, 3-pentanone, and cyclohexanone. Examples of esters include methyl formate, ethyl formate, methyl acetate, 3-methoxybutyl acetate, methyl propionate, diethyl oxalate, dimethyl maleate, monoacetin, diacetin, triacetin, ethylene carbonate, propylene carbonate, triethyl phosphate, acetonitrile, methyl lactate, ethyl lactate, butyl lactate, methyl acetoacetate, and ethyl acetoacetate. Examples of nitrogen-containing compounds include pyridine, α-picoline, β-picoline, γ-picoline, ethylenediamine, propylenediamine, tetraethylenepentamine, formamide, N-methyl formamide, N,N-diethyl formamide, and acetamide. Examples of heterocyclic compounds include 2-pyrrolidone, N-methyl-2-pyrrolidone, morpholine, and N-methylmorpholine.

### Surfactant

A surfactant in the maintenance fluid is used to adjust the surface tension of the maintenance fluid as well as to improve ink miscibility or cleaning performance, and wettability to the inner wall of the flow passage. The surfactant is not particularly limited, but it is preferable to use an anionic surfactant, a nonionic surfactant, a silicon-based surfactant, a fluorine-based surfactant, an acetylene glycol-based surfactant, and the like. Among them, from the viewpoint of cleaning performance of the maintenance fluid and miscibility with ink, an anionic surfactant, a silicon-based surfactant, and an acetylene glycol-based surfactant are more preferable.

Examples of the anionic surfactant include EMAL, LATEMUL, PELEX, NEOPLEX, and DEMOL (all manufactured by the Kao Corporation), and SUNNOL, LIPOLAN, LIPON, and LIPAL (all manufactured by the Lion Corporation). Examples of the nonionic surfactant include NOIGEN, EPAN, and SORGEN (all manufactured by Dai-Ichi Kogyo Seiyaku Co., Ltd.), EMULGEN, AMIET, and EMASOL (all manufactured by the Kao Corporation), and NAROACTY, EMULMIN, and SANNONIC (all manufactured by Sanyo Chemical Industries, Ltd.). Examples of the fluorine-based surfactant include MEGAFAC F-114, F-410, F-440, F-447, F-553, and F-556 (manufactured by the DIC Corporation), and SURFLON S-211, S-221, S-231, S-233, S-241, S-242, S-243, S-420, S-661, S-651, and S-386 (manufactured by AGC Seimi Chemical Co., Ltd.).

Examples of the acetylene glycol-based surfactant include Surfynol 104 (HLB = 4), 82 (HLB = 4), 420 (HLB = 4), 440 (HLB = 8), 465 (HLB = 13), 485 (HLB = 17), TG (HLB = 9), 2502 (HLB = 8), Dinol 604 (HLB = 8), and Dinol 607 (HLB = 8) (all of these products are acetylene glycol-based surfactants; manufactured by Air Products and Chemicals, Inc.), Olfine E1004 (HLB = 8), E1010 (HLB = 13), PD004, and EXP4300 (all of these products are acetylene glycol-based surfactants; manufactured by Nissin Chemical Co., Ltd.), and acetylenol EH, E40, E60, E81, E100, and E200 (all of these products are acetylene glycol-based surfactants; manufactured by Kawaken Fine Chemicals Co., Ltd.).

Examples of the silicon-based surfactant include FZ-2122 (HLB value = 0), FZ-2110 (HLB = 0), FZ-7006 (HLB = 2), FZ-2166 (HLB = 3), FZ-2164 (HLB = 4), FZ-7001 (HLB = 5), FZ-2120 (HLB = 6), SH 8400 (HLB = 7), FZ-7002 (HLB = 8), FZ-2104 (HLB = 9), 8029 ADDITIVE, 8032 ADDITIVE, 57 ADDITIVE, 67 ADDITIVE, and 8616 ADDITIVE (all manufactured by Dow Corning Toray Co., Ltd.), KF-6012 (HLB = 7), KF-6015 (HLB = 5), KF-6004 (HLB = 9), KF-6013 (HLB = 10), KF-6011 (HLB = 15), KF-6043 (HLB = 15), KP-104, 110, 112, 323, 341, and 6004 (all manufactured by Shin-Etsu Chemical Co., Ltd.), and BYK-300/302, BYK-306, BYK-307, BYK-320, BYK-325, BYK-330, BYK-331, BYK-333, BYK-337, BYK-341, BYK-344, BYK-345/346, BYK-347, BYK-348, BYK-375, BYK-377, BYK-378, BYK-UV3500, BYK-UV3510, BYK-310, BYK-315, BYK-370, BYK-UV3570, BYK-322, BYK-323, BYK-350, BYK-352, BYK-354, BYK-355, BYK-358N/361N, BYK-380N, BYK-381, BYK-392, BYK-340, BYK-Silclean 3700, and BYK-Dynwet 800 (all manufactured by BYK-Chemie GmbH).

These surfactants may be used alone or in a combination of two or more types thereof. The content of the surfactant is appropriately adjusted according to ink miscibility, cleaning performance, wettability to the inner wall of the flow passage, or the inkjet ejection property. The content of the surfactant is preferably about 0.01 to 5.0% by mass and more preferably in a range of 0.1 to 3.0% by mass, with respect to the total amount of the maintenance fluid.

The HLB value is a value representing the degree of affinity of a surfactant to water and oil (water-insoluble organic compound). The property or use application of the surfactant is also determined to some extent by the HLB value. The HLB value is determined on a scale of 0 to 20. A value closer to 0 indicates higher lipophilicity and a value closer to 20 indicates higher hydrophilicity. The property of the surfactant is determined the some extent by the HLB value. When the HLB value is approximately from 1 to 3, the surfactant is hardly dispersed in water; when the HLB value is approximately from 3 to 6, some of the surfactant is dispersed in water; when the HLB value is approximately from 6 to 10, the surfactant is dispersed in water to become an emulsion; when the HLB value is approximately from 10 to 13, the surfactant is dispersed in water to become translucent; and when the HLB value is approximately from 13 to 19, the surfactant is dispersed in water to become transparent. The HLB value of the acetylene glycol-based surfactant and the surface tension at 25°C in a 0.1% aqueous solution thereof are presented in Table 1.

**[Table 1]**

| | HLB | Surface tension (m N/m) | Dissolved state |
|---|---|---|---|
| Surfynol 440 | 8 | 34 | Emulsified |
| Surfynol 2502 | 8 | 35 | Emulsified |
| Dinol 607 | 8 | 26 | Emulsified |
| Surfynol 465 | 13 | 43 | Dissolved |
| Olfine E1010 | 13 | 43 | Dissolved |
| Surfynol 485 | 17 | 48 | Dissolved |

In the case of the acetylene glycol-based surfactant, as the HLB value is decreased, the surface tension is decreased, and thus permeability of the solution can be improved. However, when the HLB value is low, it is difficult to dissolve the surfactant in water, and thus precipitation or separation may be problematic in some cases. As it is clearly seen in Examples to be described later, since the maintenance fluid of the invention is also favorably dissolved in a surfactant having an HLB value of 10 or less, surfactants having a wide range of HLB values can be used. When the application range of the surfactant is wide, it is possible to enhance the cleaning effect by adjusting the surface tension to be lower, or in the case of mixing with an ink, it is possible to prepare the maintenance fluid so that it is less likely to aggregate or precipitate the surfactant dissolved in the ink and has excellent miscibility.

### Other Components

In the invention, other components as necessary may be further contained in the maintenance fluid. Examples of other components include a water-soluble polymer compound, a dispersing agent, a penetrating agent, a wetting agent, a preservative, an antioxidant, a conductivity adjuster, a pH adjuster, a viscosity adjuster, an antifoaming agent, and a deoxidant. These components are not particularly limited and can be used within a range not to impair safety or the physical properties of the maintenance fluid.

### Preparation Method of Maintenance Fluid

The preparation method of the maintenance fluid is not particularly limited. Examples of the preparation method include a method of adding a surfactant to a water-soluble organic solvent to dissolve the surfactant, and then performing preparation by adding water, a method of performing preparation by adding a surfactant to an aqueous solvent obtained by mixing water and a solvent, and a method of performing preparation by mixing a solution obtained by dissolving a solvent in a surfactant and a solution obtained by dissolving or dispersing a surfactant in water. It is preferable that the adjusted maintenance fluid be filtered to be refined by a filter of 10 µm or less.

### Surface Tension

The surface tension of the maintenance fluid is preferably 35 mN/m or less, more preferably 32 mN/m, and even more preferably 30 mN/m, from the viewpoint of wettability to a component surface or miscibility with an ink. On the other hand, in a case where the maintenance fluid is ejected by an inkjet method, it is preferable to set the surface tension of the maintenance fluid to 20 mN/m or more, from the viewpoint of making the ejecting stability of the maintenance fluid from the ejection head favorable.

The surface tension of the maintenance fluid can be adjusted by appropriately selecting the solvents and the surfactants described above. Incidentally, the surface tension in the invention is a value obtained by performing measurement at a measurement temperature of 25°C using the Wilhelmy method (type: CBVP-Z manufactured by Kyowa Interface Science Co., Ltd.).

### Inkjet Ink Set

The maintenance fluid of the invention can be used with respect to an aqueous inkjet ink without any particular limitation. For example, an ink obtained by dispersing a pigment as a color material by a surfactant or a water-soluble resin, an ink obtained by modifying a pigment surface with a sulfonyl group, a carboxyl group, a phosphorus-containing functional group, and a resin, and an ink using a water-soluble resin or a resin emulsion as a binder are exemplified. Furthermore, the maintenance fluid of the invention can be used with respect to a treatment liquid for inkjet recording containing a metal salt or a water-soluble resin which is used for improving image quality or resistance properties, without any particular limitation.

Also, an ink set of the maintenance fluid of the invention and the aqueous inkjet ink as described above is also one example of the invention.

In the case of the maintenance fluid of the related art, even when the pH immediately after preparation is adjusted to 7 or more, the pH of the maintenance fluid may be changed to 7 or less after long-term storage or after storage under heating in some cases. For this reason, in the case of mixing with the aqueous inkjet ink as described above in which the pH is generally adjusted to 7 or more, a problem has arisen in which aggregation or gelation occurs. Furthermore, when the pH of the maintenance fluid is decreased, a metal component in the inside of a head or a liquid-repellent-processed nozzle surface of the inkjet recording apparatus may be corroded in some cases. Accordingly, it is required that the pH be maintained at 7 or more. In this regard, the pH of the maintenance fluid of the invention is not decreased to 7 or less even after long-term storage or after storage under heating and the maintenance fluid of the invention is excellent in terms of stability.

Furthermore, as described in Examples to be described later, the maintenance fluid of the invention has the feature that the maintenance fluid is widely applicable to a variety of types of inkjet ink composition and is extremely beneficial in practical usage. This point is neither disclosed nor suggested in Patent Documents 1 and 2 described above, and is the prominent effect of the maintenance fluid of the invention using 1,3-propanediol.

### Method of Cleaning Inkjet Recording Apparatus

As one example of the method of using the maintenance fluid of the invention, the liquid-repellent surface or the nozzle may be cleaned by directly spraying on the maintenance fluid or wiping it using a cloth impregnated with the maintenance fluid with respect to the liquid-repellent surface of the ink ejection portion of the inkjet recording apparatus. Furthermore, the inside of the flow passage and the inside of the head or the periphery of the nozzle of the inkjet recording apparatus may be cleaned by replacing the ink of the inkjet recording apparatus with the maintenance fluid and then ejecting the maintenance fluid from the ejection portion.

### EXAMPLES

Hereinafter, the invention will be described in more detail by means of Examples, but the invention is not limited thereto. Incidentally, in Examples, "part(s)" represents "part(s) by mass."

### Experimental Example 1

The storage stability of the following mixed solutions at 60°C is evaluated. The evaluation results are based on the following criteria A and B.
A: It is a homogeneous transparent solution, and turbidity or separation and precipitation are not observed.
B: Turbidity, separation, or precipitation is observed.

**[Table 2]**

| | | Mixture composition | | | | |
|---|---|---|---|---|---|---|
| | | S1 | S2 | S3 | S4 | S5 |
| Surfactant | F1 | A | A | A | A | A |
| | F2 | A | A | B | B | B |

Mixture composition S1: 30 parts of 1,3-propanediol, 67 parts of water, and 3 parts of a surfactant
Mixture composition S2: 20 parts of 1,3-propanediol, 10 parts of propylene glycol, 67 parts of water, and 3 parts of a surfactant
Mixture composition S3: 30 parts of glycerin, 67 parts of water, and 3 parts of a surfactant
Mixture composition S4: 30 parts of diethylene glycol, 67 parts of water, and 3 parts of a surfactant
Mixture composition S5: 30 parts of diethylene glycol monomethyl ether, 67 parts of water, and 3 parts of a surfactant
Surfactant F1: Olfine E1010 (HLB 13, Nissin Chemical Co., Ltd.)
Surfactant F2: Dinol 607 (HLB 8, Air Products and Chemicals, Inc.)

From the result of Experimental Example 1, S1 and S2 containing 1,3-propanediol could dissolve a surfactant having a low HLB value and low hydrophilicity. When containing 1,3-propanediol, the mixed solution can stably dissolve a surfactant having a low HLB value and low hydrophilicity as well as a surfactant having a high HLB value and high hydrophilicity. Therefore, a broad range of surfactants can be used and it is possible to provide a maintenance fluid that is applicable to a variety of types of ink.

### Experimental Example 2

The evaluation was conducted on the maintenance fluids M1 to M19 obtained by adjusting the compositions as presented in Table 3. The evaluation results are collectively presented in Table 4. Incidentally, the ink used for the miscibility evaluation was used by mixing a total of 100 parts of the following compositions and performing adjustment.
Cab-O-Jet 465 (surface treatment pigment dispersion liquid, manufactured by Cabot Corporation): 30 parts,
Glycerin: 10 parts,
Propylene glycol: 10 parts,
Olfine E1010: 1.0 part,
AE986B (acrylic resin emulsion, manufactured by JSR Corporation): 10 parts, and
Ion-exchange water: 39 parts

The measurement of pH was carried out at a measurement temperature of 25°C using HM25R manufactured by DKK-TOA CORPORATION. The measurement of surface tension was carried out at a measurement temperature of 25°C using the Wilhelmy method (type: CBVP-Z manufactured by Kyowa Interface Science Co., Ltd.).

Incidentally, the abbreviated names in Tables are as follows. 13PD: 1,3-propanediol, PG: propylene glycol, GLY: glycerin, PD: 1,2-pentanediol, DEG: diethylene glycol, MDG: diethylene glycol monomethyl ether, A1: Dinol 607 (acetylene glycol type nonionic surfactant), A2: Olfine E1010 (acetylene glycol type nonionic surfactant), A3: EMAL20T (anionic surfactant), A4: BYK-348 (silicon-based surfactant), and P: Proxel LV(S) (preservative, manufactured by Arch Chemical, Inc.).

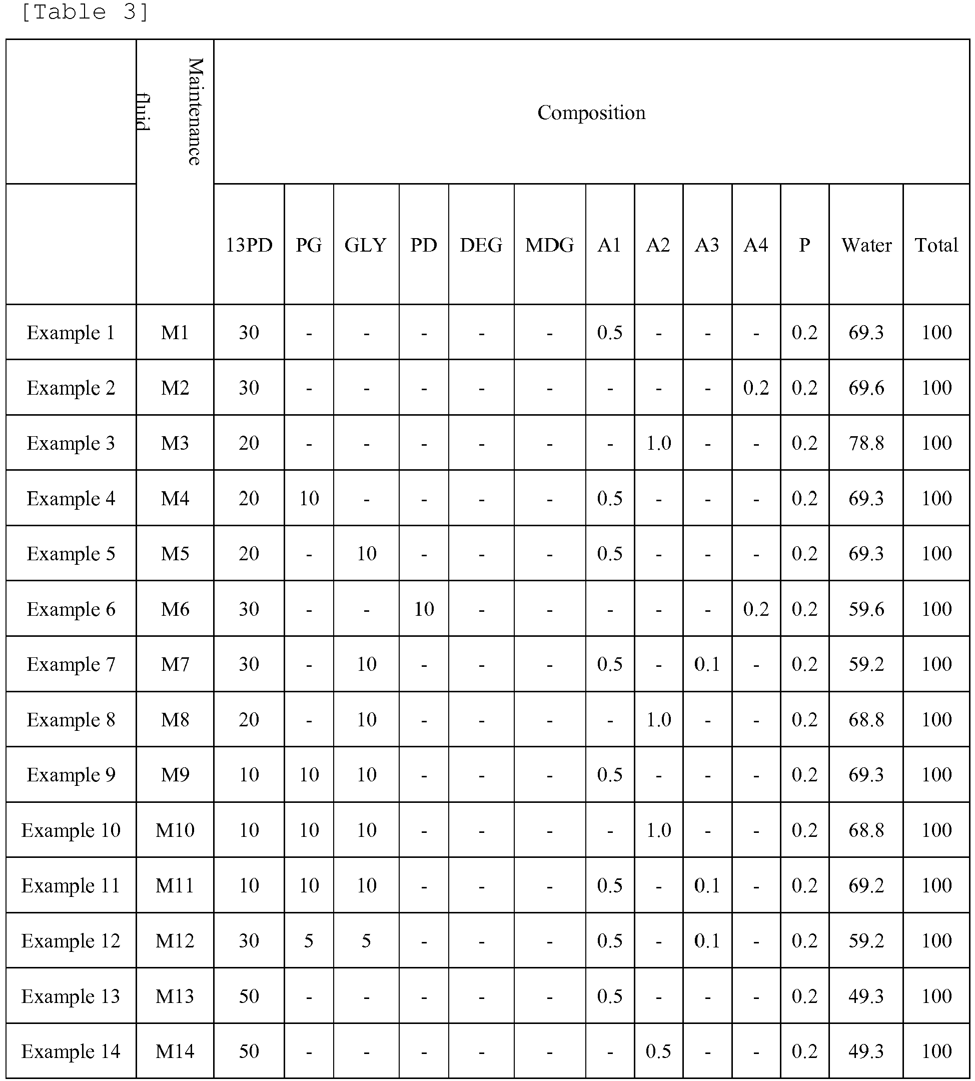

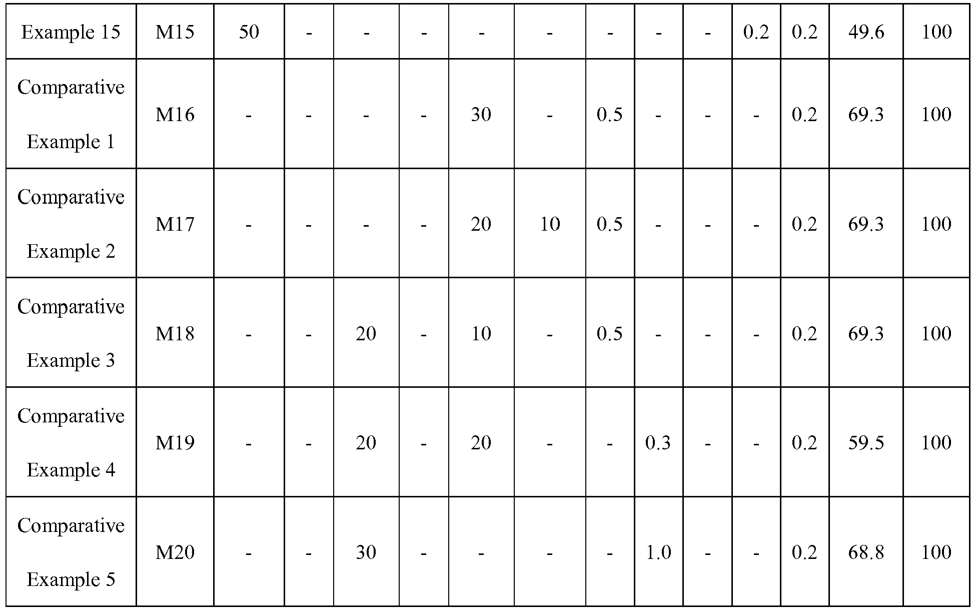

**[Table 4]**

| | Maintenance fluid | Property | | Evaluation | | |
|---|---|---|---|---|---|---|
| | | Surface tension | pH | 2-1 | 2-2 | 2-3 |
| Example 1 | M1 | 29 | 8.6 | A | A | A |
| Example 2 | M2 | 25 | 8.2 | A | A | A |
| Example 3 | M3 | 30 | 8.7 | A | A | A |
| Example 4 | M4 | 28 | 8.5 | A | A | A |
| Example 5 | M5 | 28 | 8.5 | A | A | A |
| Example 6 | M6 | 23 | 8.3 | A | A | A |
| Example 7 | M7 | 30 | 8.5 | A | A | A |
| Example 8 | M8 | 30 | 8.7 | A | A | A |
| Example 9 | M9 | 28 | 8.4 | A | A | A |
| Example 10 | M10 | 30 | 8.5 | A | A | A |
| Example 11 | M11 | 28 | 8.1 | A | A | A |
| Example 12 | M12 | 28 | 8.0 | A | A | A |
| Example 13 | M13 | 31 | 8.7 | A | A | A |
| Example 14 | M14 | 33 | 8.8 | A | A | A |
| Example 15 | M15 | 21 | 8.2 | A | A | A |
| Comparative Example 1 | M16 | 33 | 8.0 | B | B | B |
| Comparative Example 2 | M17 | 27 | 7.8 | B | B | B |
| Comparative Example 3 | M18 | 34 | 8.2 | B | B | B |
| Comparative Example 4 | M19 | 32 | 8.0 | B | A | A |
| Comparative Example 5 | M20 | 28 | 8.4 | A | B | B |

The evaluation criteria in Table 4 are as follows. pH stability (Evaluation 2-1)
A: The difference in pH after storage at 60°C for one month in a state where the maintenance fluid is sealed in a glass bottle and before storage it is 1.0 or less
B: The difference in pH after storage at 60°C for one month in a state where the maintenance fluid is sealed in a glass bottle and before storage it is 1.0 or more High-temperature stability (Evaluation 2-2)
A: Even when the maintenance fluid is sealed in a glass bottle and stored at 60°C for one month no precipitate is generated.
B: When the maintenance fluid is sealed in a glass bottle and stored at 60°C for one month precipitate is generated. Low-temperature stability (Evaluation 2-3)
A: Even after the maintenance fluid is sealed in a glass bottle and stored at -10°C for one month generation of precipitate is not observed.
B: After the maintenance fluid is sealed in a glass bottle and stored at -10°C for one month generation of precipitate is observed.

As it can be clearly seen from Table 4, Examples 1 to 15 containing 1,3-propanediol were inkjet maintenance fluids that were excellent in terms of solubility in a surfactant, less likely to undergo quality deterioration, and had good stability.

### Experimental Example 3

The evaluation results of miscibility of the above-described maintenance fluids M1, M6, M11, and M16 with inks A to G and cleaning performance are collectively presented in Table 5.

Evaluation 3-1: The maintenance fluids M1, M6, M11, and M16 that were stored under heating at 60°C for one month and each ink was mixed and evaluated.

Evaluation 3-2: After the maintenance fluids M1, M6, M11, and M16 were mixed with each ink, the resultant mixtures were stored under heating at 60°C for one month and then miscibility was evaluated.

The evaluation criteria (Evaluations 3-1 and 3-2) are as follows.
A: Even when the maintenance fluid is mixed with an ink no aggregate is generated.
B: When the maintenance fluid is mixed with an ink an aggregate is generated.

Evaluation 3-3: After 200 ml of each ink and maintenance fluid alternately passed through an inkjet recording apparatus (manufactured by Konica Minolta, Inc., type number: KM512, droplet amount: 10 pL, resolution: 720 dpi), the evaluation was carried out on whether ink flight deflection or non-ejection of ink through the nozzle was observed.

Evaluation 3-4: After the ink and the maintenance fluid alternately passed for six months in the same manner as in Evaluation 3-3, the evaluation was carried out on whether ink flight deflection or non-ejection of ink through the nozzle was observed.

The evaluation criteria (Evaluations 3-3 and 3-4) are as follows.
A: Flight deflection or non-ejection of ink through the nozzles is not observed.
B: Flight deflection or non-ejection of ink through the nozzles is observed.

**[Table 5]**

| Composition | | Ink A | Ink B | Ink C | Ink D | InkE | Ink F | Ink G |
|---|---|---|---|---|---|---|---|---|
| Pigment dispersing element 1 | | 30 | - | - | - | - | - | - |
| Pigment dispersing element 2 | | - | 30 | - | - | - | 30 | - |
| Pigment dispersing element 3 | | - | - | 30 | - | - | - | - |
| Pigment dispersing element 4 | | - | - | - | 30 | - | - | 30 |
| Pigment dispersing element 5 | | - | - | - | - | 30 | - | - |
| Resin emulsion 1 | | 10 | - | 10 | 10 | - | 10 | - |
| Resin emulsion 2 | | - | 10 | - | - | 10 | - | 10 |
| Surfactant | | 0.5 | 0.5 | 0.5 | 0.5 | 0.5 | 0.5 | 0.5 |
| Glycerin | | 30 | 30 | 30 | 30 | 30 | - | - |
| Diethylene glycol | | - | - | - | - | - | 30 | 30 |
| Water | | 29.5 | 29.5 | 29.5 | 29.5 | 29.5 | 29.5 | 29.5 |
| Total | | 100 | 100 | 100 | 100 | 100 | 100 | 100 |

| Evaluation | Ink A | Ink B | Ink C | Ink D | InkE | Ink F | Ink G | Ink A |
|---|---|---|---|---|---|---|---|---|
| Evaluation 3-1 | M1 | A | A | A | A | A | A | A |
| | M6 | A | A | A | A | A | A | A |
| | M11 | A | A | A | A | A | A | A |
| | M16 | B | B | B | B | B | B | B |
| Evaluation 3-2 | M1 | A | A | A | A | A | A | A |
| | M6 | A | A | A | A | A | A | A |
| | M11 | A | A | A | A | A | A | A |
| | M16 | B | B | B | B | B | B | B |
| Evaluation 3-3 | M1 | A | A | A | A | A | A | A |
| | M6 | A | A | A | A | A | A | A |
| | M11 | A | A | A | A | A | A | A |
| | M16 | A | A | A | A | A | A | A |
| Evaluation 3-4 | M1 | A | A | A | A | A | A | A |
| | M6 | A | A | A | A | A | A | A |
| | M11 | A | A | A | A | A | A | A |
| | M16 | B | B | B | B | B | B | B |

Pigment dispersing element 1: Self-dispersible black pigment "CAB-O-JET 300" (manufactured by Cabot Specialty Chemicals)

Pigment dispersing element 2: Self-dispersible black pigment "BONJET BLACK CW-1" (manufactured by ORIENT CHEMICAL INDUSTRIES CO., LTD.)

Pigment dispersing element 3: Self-dispersible magenta pigment "CAB-O-JET 465" (manufactured by Cabot Specialty Chemicals)

Pigment dispersing element 4: Pigment dispersing element 4 was obtained by dissolving 3.0 g of styrene-acrylate polymer dispersing agent ("JONCRYL 682" manufactured by BASF Japan Ltd., weight-average molecular weight: 1,700, acid value: 238 mgKOH/g) and 1.8 g of triethanolamine in 80.1 g of ion-exchange water, adding 15 g of Pigment Red 122 and 0.1 g of antifoaming agent ("Surfynol 104E" manufactured by Air Products and Chemicals, Inc.), and then dispersing the mixture by a paint shaker using zirconia beads.

Pigment dispersing element 5: Pigment dispersing element 5 was obtained by replacing Pigment Red 122 with Pigment Yellow 74 in Pigment dispersing element 4.

Resin emulsion 2: Acrylic resin emulsion "AE986B" (manufactured by JSR Corporation)

Resin emulsion 1: Acrylic resin emulsion "VONCOAT SA-6360" (manufactured by DIC Corporation)

Surfactant: Olfine E1010 (manufactured by Nissin Chemical Co., Ltd.)

As it can be clearly seen from Evaluations 3-1 and 3-2 in Table 5, M1, M6, and M11 having good stability were mixed with all inks without any problem. On the other hand, in Evaluation 2, M16 having poor stability aggregated or settled out with respect to all inks.

The state where heating was performed to 60°C in Evaluations 3-1 and 3-2 is considered to promote time degradation. M16 using diethylene glycol was degraded over time and thus the miscibility with an ink deteriorated. However, M1, M6, and M11 using 1,3-propanediol were less likely to be degraded over time and thus it can be understood that a favorable maintenance fluid with no problem in performance can be provided even in the case of long-term storage.

From the result of Evaluation 3-3, immediately after the ink and the maintenance fluid were mixed, all maintenance fluids have no problem in terms of ejection property. However, in Evaluation 3-4, in the case of continuous use over a long period of time, M16 as Comparative Example had trouble with ejecting. When the maintenance fluid is used to clean the inside of the ink flow passage of the inkjet recording apparatus, stability may be problematic in a state where the ink and the maintenance fluid are mixed in a case where the apparatus are not used over a long period of time or a case where the temperature of the apparatus is significantly increased due to continuous use. Furthermore, when the ink and the maintenance fluid are alternately and repeatedly used, in the case of poor cleaning performance, the ejection property gradually deteriorated. The maintenance fluid of the invention is preferably used as a maintenance fluid used to clean the inside of the ink flow passage of the inkjet recording apparatus in terms of the facts that the maintenance fluid of the invention is stable even when it is heated in a mixed state and the ejection property is maintained to be favorable. Hitherto, there has been no perception in time degradation of mixability of the maintenance fluid and an ink and it was found that the maintenance fluid of the invention, which does not impair the physical properties of the inkjet recording apparatus even in a long-term use, was extremely useful.

### Experimental Example 4

Regarding the water-soluble organic solvents in Table 6, an epoxy resin piece was immersed under the following conditions and then the swelling and dissolving degrees were observed. Specifically, the epoxy resin piece was immersed in each solution and left to stand at 60°C for four weeks, and then the change in state was evaluated based on the following criteria.
A: The change in weight of the epoxy resin piece is within ±2% and appearance change also rarely occurs.
B: The change in weight of the epoxy resin piece is more than ±2% or the epoxy resin piece is swollen or dissolved.

As it can be seen from Table 6, 1,3-propanediol essential for the invention, or glycerin or propylene glycol which can be preferably used together in the invention does not adversely affect an epoxy resin. On the other hand, it is found that N-methyl-2-pyrrolidone or sulfolane swells or dissolves an epoxy resin constituting a component or a joining portion of a recording apparatus and thus adversely affects the recording apparatus.

**[Table 6]**

| | a | b | c | d | e |
|---|---|---|---|---|---|
| 1,3-Propanediol | 30 | | | | |
| Glycerin | | 30 | | | |
| Propylene glycol | | | 30 | | |
| N-Methyl-2-pyrrolidone | | | | 30 | |
| Sulfolane | | | | | 30 |
| Water | 70 | 70 | 70 | 70 | 70 |
| Total | 100 | 100 | 100 | 100 | 100 |
| Adequacy evaluation on component | A | A | A | B | B |

## Claims

1. An inkjet maintenance fluid comprising water, a water-soluble organic solvent, and a surfactant,
wherein 1,3-propanediol is contained as the water-soluble organic solvent.

2. The inkjet maintenance fluid according to claim 1,
wherein the water-soluble organic solvent is contained at an amount of 20% by mass or more in the inkjet maintenance fluid, and
the 1,3-propanediol is 30% by mass or more of the water-soluble organic solvent.

3. The inkjet maintenance fluid according to claim 1 or 2,
wherein, in the inkjet maintenance fluid, the 1,3-propanediol is contained at an amount of 10% by mass or more to 80% by mass or less and the content of the following organic solvent (A) and organic solvent (B) is each less than 5%. Organic solvent (A): an organic solvent having an ignition point of lower than 60°C, selected from the group consisting of alcohols, ketones, and esters
Organic solvent (B): an organic solvent selected from the group consisting of nitrogen-containing heterocyclic compounds and cyclic sulfones

4. The inkjet maintenance fluid according to any one of claims 1 to 3, further comprising propylene glycol and/or glycerin as the water-soluble organic solvent.

5. The inkjet maintenance fluid according to any one of claims 1 to 4, wherein the surfactant is a nonionic surfactant.

6. The inkjet maintenance fluid according to any one of claims 1 to 5, wherein the surfactant is an acetylene glycol-based surfactant.

7. The inkjet maintenance fluid according to any one of claims 1 to 4, wherein the surfactant is a silicon-based surfactant.

8. The inkjet maintenance fluid according to any one of claims 1 to 7, further comprising an anionic surfactant as the surfactant.

9. The inkjet maintenance fluid according to any one of claims 1 to 8, further comprising a surfactant having an HLB value of 14 or less as the surfactant.

10. A method of cleaning an inkjet recording apparatus, the method comprising cleaning a liquid-repellent surface of an ink ejection portion of an inkjet recording apparatus using the inkjet maintenance fluid according to any one of claims 1 to 9.

11. A method of cleaning an inkjet recording apparatus, the method comprising ejecting the inkjet maintenance fluid according to any one of claims 1 to 9 from an ink ejection portion of an inkjet recording apparatus to clean an inside of a flow passage of the ink ejection portion.

12. An inkjet ink set comprising:
the inkjet maintenance fluid according to any one of claims 1 to 9; and
an aqueous inkjet ink containing water, a water-soluble organic solvent, a surfactant, and a color material.
